# EUROPÄISCHE PATENTSCHRIFT

(11) **EP 4 026 405 B1**
(45) Veröffentlichungstag und Bekanntmachung des Hinweises auf die Patenterteilung: **03.12.2025**
(21) Anmeldenummer: 20767774.1
(22) Anmeldetag: 03.09.2020
(51) Int. Cl.: H05B 47/185, H05B 47/175, F21V 21/35, F21V 23/04, F21V 23/06, H01R 9/24, H01R 25/14

(54) **LICHTBANDSYSTEM MIT DATENÜBERTRAGUNGSFUNKTION**
LIGHT STRIP SYSTEM HAVING DATA TRANSMISSION FUNCTION
SYSTÈME DE BANDE LUMINEUSE DOTÉE D'UNE FONCTION DE TRANSFERT DE DONNÉES

(30) Priorität: 03.09.2019 DE 202019104854 U
(43) Veröffentlichungstag der Anmeldung: 13.07.2022
(73) Patentinhaber: Zumtobel Lighting GmbH, 6850 Dornbirn (AT)
(72) Erfinder: MACHATE, Andreas, 6850 Dornbirn (AT); LADSTÄTTER, Gerald, 6850 Dornbirn (AT)
(74) Vertreter: Beder, Jens
(86) Internationale Anmeldenummer: PCT/EP2020/074637
(87) Internationale Veröffentlichungsnummer: WO 2021/043921

(56) Entgegenhaltungen:
- EP-A1- 3 203 814
- WO-A1-2012/089355
- WO-A2-2013/024460
- CN-A- 106 793 399
- DE-A1- 102009 054 510
- DE-A1- 102014 205 892
- DE-B3- 102016 011 815
- US-A1- 2006 056 855
- US-A1- 2014 217 906
- US-B1- 8 915 609

## Beschreibung

Die Erfindung betrifft ein System zum Übertragen von Steuersignalen oder Daten zwischen Komponenten eines Beleuchtungssystems.

In der Gebäudeautomation empfangen Steuereinrichtungen Signale von Sensoren und senden Steuersignale an Leuchten oder andere Geräte über Kabel oder mittels kabelloser Übertragungsverfahren.

Die WO 2012/089355 A1 offenbart ein Sicherheits- bzw. Notbeleuchtungssystem, bei dem eine Steuereinrichtung Funksignale für die Steuerung der vorgeschriebenen regelmäßigen Funktionsprüfungen an die Sicherheitsleuchten direkt oder mittels Repeater überträgt.

Ein Beleuchtungssystem, bei dem Deckenleuchten mit einem Funknetzwerkmodul ausgestattet sind, um für WLAN-fähige Geräte einen Internet-Zugang bereitzustellen, ist in der DE 10 2011 007416 A1 offenbart.

Die Qualität und Reichweite einer Funkverbindung in Gebäuden hängt jedoch stark von den räumlichen Gegebenheiten ab. Insbesondere Wände und Einrichtungsgegenstände können die Funkübertragung beeinträchtigen. Die Verwendung von Repeatern bei der Funkübertragung oder die Verlegung von separaten Kabeln für die Daten- bzw. Signalübertragung ist aufwendig und teuer.

Die EP 3 203 814 A1 offenbart ein Lichtbandsystem mit Sensoreinheiten, Lichtbandmodulen und einer Steuereinheit, welche mittels einer PLC-Verbindung (Powerline Communication) miteinander verbunden sind.

Die US 8 915 609 B1 offenbart ein Lichtbandsystem mit einer Tragschiene zum Befestigen von Leuchten und in der Tragschiene verlaufenden Stromschienen, über die auch Daten übertragen werden.

Die US 2006/056855 A1 offenbart ein Beleuchtungssystem, bei dem Daten mittels Powerline zu den Leuchten übertragen werden.

Die WO 2013/024460 A2 offenbart ein Beleuchtungssystem, bei dem Steuersignale und Daten über Stromschienen von einer Steuervorrichtung zu den Leuchten übertragen werden, wobei ein die Signale bzw. Daten sendendes Sendemodul mittels einem Multiplexer mit einer der Stromschienen verbunden wird.

Die CN 106 793 399 A offenbart ein Lichtbandsystem mit einer Tragschiene, fünf in der Tragschiene verlaufenden elektrischen Leitungen und einem Einspeiser, der mittels einer lösbaren elektrischen Steckverbindung die fünf Leitungen kontaktiert, wobei zwei der in der Tragschiene verlaufenden elektrischen Leitungen der Stromversorgung der Leuchten des Lichtbandsystems dienen und die drei anderen Leitungen der Übertragung von Steuersignalen an die Leuchten.

Die DE 10 2009 054 510 A1 offenbart ein Lichtbandsystem mit einer Tragschiene, in der Tragschiene verlaufenden Stromschienen und einer in die Tragschiene einsetzbaren Leuchte, die einen Stromschienenadapter aufweist, der die Stromschienen mittels am Stromschienenadapter befindlichen Kontaktstiften im eingesetzten bzw. eingeschobenen Zustand kontaktiert. Die Tragschiene weist zusätzlich zu den Stromschienen für die Stromversorgung der Leuchte auch Steuerschienen auf, über die Steuersignale übertragen werden und die mit dem Stromschienenadapter bzw. dessen Kontaktstiften kontaktiert werden.

Die US 2014/217906 A1 offenbart eine Leuchte für ein Lichtbandsystem, die Mittel zum Befestigen der Leuchte an einer Tragschiene des Lichtbandsystems, Mittel zum Kontaktieren von an der Tragschiene angeordneten elektrischen Leitungen und einen Empfänger zum kabellosen Empfang von Steuersignalen aufweist.

Die DE 10 2014 205892 A1 offenbart eine Leuchte für ein Lichtbandsystem, die Mittel zum Befestigen der Leuchte an einer Tragschiene des Lichtbandsystems und Mittel zum Kontaktieren von an der Tragschiene angeordneten elektrischen Leitungen und ein Balkenelement aufweist, wobei das Befestigungsmittel an einem Balkenelement angeordnet ist, das einen Spannungswandler einschließt und das in eine Öffnung in der Tragschiene eingeführt wird, um die Leuchte an der Tragschiene zu befestigen.

Die DE 10 2014 205892 A1 offenbart eine Leuchte für ein Lichtbandsystem, bei der an einem Balkenelement Mittel zum Befestigen der Leuchte an einer Tragschiene des Lichtbandsystems und Mittel zum Kontaktieren von an der Tragschiene angeordneten elektrischen Leitungen angeordnet sind, wobei das Balkenelement einen Spannungswandler einschließt und in eine Öffnung in der Tragschiene eingeführt wird, um die Leuchte an der Tragschiene zu befestigen.

Der Erfindung liegt die Aufgabe zugrunde, ein Lichtbandsystem bereitzustellen, mit dem Steuersignale und/oder Daten ohne hohen technischen Aufwand übertragen werden können und das bezüglich der Positionierung der Sende- und/oder Empfangsgeräte flexibel ist.

Diese Aufgabe wird gemäß den Merkmalen des unabhängigen Anspruchs 1 gelöst. Die Erfindung wird durch die Merkmale der abhängigen Ansprüche weitergebildet.

Gemäß der vorliegenden Erfindung erfolgt die Signal- bzw. Datenübertragung mittels einem Lichtbandsystem, das zumindest eine Tragschiene zum Befestigen von Komponenten eines dem Lichtbandsystem zugehörigen Beleuchtungssystems, in der Tragschiene verlaufende und von den Komponenten zur Stromversorgung der Komponenten kontaktierbare elektrische Leitungen, einen Daten-Anschluss zum Empfangen von Daten und einen mit den elektrischen Leitungen und dem Daten-Anschluss verbundenen ersten Adapter aufweist. Der Daten-Anschluss ist dazu ausgebildet, von dem Daten-Anschluss empfangene Daten mittels eines Modulationsverfahrens über die elektrischen Leitungen an einen zweiten Adapter, der an die elektrischen Leitungen anschließbar ist, zu senden. Die Datenübertragung kann der Steuerung der Komponenten des Lichtbandsystems oder anderer Komponenten des zu dem Lichtbandsystem gehörenden Beleuchtungssystems dienen. Zusätzlich oder alternativ können auch systemfremde Daten aus einem anderen Netzwerk an ein mit dem Lichtbandsystem verbundenes Gerät übertragen werden. Die Datenübertragung kann in beide Richtungen zwischen dem ersten und dem zweiten Adapter erfolgen.

Da die Datenübertragung über die in der Tragschiene verlaufenden und zur Stromversorgung der Komponenten in der Schiene vorhandenen elektrischen Leitungen erfolgt, müssen keine zusätzlichen Leitungen verlegt werden. Die Einspeisung der Daten in die elektrischen Leitungen und der Datenabgriff aus den elektrischen Leitungen kann an beliebigen Stellen der Tragschiene erfolgen, so dass die Positionierung der Sende- und/oder Empfangsgeräte sehr flexibel ist. Durch die Verwendung der Leitungen in der Tragschiene wird andererseits eine Art lokales Netz geschaffen, innerhalb dessen die Datenübertragung erfolgt. Das gebäudeseitige Stromversorgungsnetz bleibt daher unberührt.

Die elektrischen Leitungen sind als Stromschienen ausgebildet sein, wobei das Lichtbandsystem einen Stromschienen-Einspeiser zur Einspeisung von Strom für die Komponenten in die Stromschienen aufweist und der erste Adapter in dem Stromschienen-Einspeiser integriert ist. Dies vereinfacht den Aufbau und reduziert die Anfälligkeit gegen Störungen der Datenübertragung und die Störung anderer Geräte durch die Datenübertragung, da sich der in dem Stromschienen-Einspeiser integrierte erste Adapter innerhalb der Tragschiene befindet und Störungen von der Tragschiene abgeschirmt werden. Mittels des Einspeisers wird dabei sichergestellt, dass das durch die Tragschiene gebildeten Netz zur Datenübertragung von dem gebäudeseitigen Stromversorgungsnetz getrennt ist und somit lediglich eine lokale Datenkommunikation mittels der Tragschiene erfolgt. Dabei kann der Einspeiser zudem eine Funktion aufweisen, welche von extern empfangene Daten hinsichtlich ihres Inhalts oder Protokolls zur Übertragung mittels der Tragschiene verarbeitet.

Gemäß der vorliegenden Erfindung weist das Lichtbandsystem zumindest eine der Komponenten auf, welche Mittel zum Befestigen der Komponente an der Tragschiene, Mittel zum Kontaktieren der elektrischen Leitungen und den mit den elektrischen Leitungen verbundenen zweiten Adapter aufweist. Der zweite Adapter ist dazu ausgebildet, Daten mittels eines Modulationsverfahrens über die elektrischen Leitungen zu senden und/oder über die elektrischen Leitungen übertragene Daten mittels eines Demodulationsverfahrens zu empfangen auf. Z.B. kann der zweite Adapter auf diese Weise Daten mit einem ersten Adapter austauschen, der der erste Adapter der oben beschriebene mit dem Datenanschluss verbundene erste Adapter sein kann oder ein anderer Adapter, der sich außerhalb des Lichtbandsystems befindet und der mit der Zuleitung des Lichtbandsystems bzw. den elektrischen Leitungen verbunden ist.

Der Datenanschluss kann im Stromschienen-Einspeiser integriert sein, was den Aufbau und die Montage vereinfacht.

Der erste Adapter kann ein Powerline/PowerLAN-Adapter sein.

Die Daten können in das Lichtbandsystem von extern kabelgebunden oder kabellos eingespeist werden, wobei der Datenanschluss ein Ethernet-Anschluss bzw. ein WLAN-Anschluss sein kann.

Die elektrischen Leitungen in der Tragschiene können so angeordnet sein, dass sie von den Komponenten an einer beliebigen Stelle entlang der Tragschiene kontaktierbar sind.

Zusätzlich kann die Komponente eine Schnittstelle zur kabelgebundenen oder kabellosen Eingabe der von dem zweiten Adapter zu sendenden Daten bzw. Ausgabe der von dem zweiten Adapter empfangenen Daten aufweisen. Die Schnittstelle kann einen Anschluss zum Anschluss eines LAN-Kabels aufweisen.

Damit für ein an der Schnittstelle angeschlossenes Gerät keine separate Stromversorgung bereitgestellt werden muss, kann die Schnittstelle dazu ausgebildet sein, ein an ihr angeschlossenes Gerät mit Energie zu versorgen. Insbesondere kann diese Stromversorgung über Ethernet PoE (englisch Power over Ethernet) erfolgen,

Alternativ oder zusätzlich kann die Komponente ein Balkenelement aufweisen, an dem zumindest das Mittel zum Befestigen der Komponente an der Tragschiene und der zweite Adapter befestigt sind und das eine Öffnung in der Tragschiene zumindest teilweise verschließt bzw. abdeckt, wenn die Komponente an der im Querschnitt U-förmigen Tragschiene befestigt ist.

Der zweite Adapter kann an dem Balkenelement so angeordnet sein, dass er sich innerhalb der Tragschiene befindet, wenn die Komponente an der Tragschiene befestigt ist. Der zweite Adapter kann zumindest eine Kontrollleuchte aufweisen, die einen bestimmten Zustand des zweiten Adapters oder einen bestimmten Status der Verbindung zwischen dem ersten Adapter und dem zweiten Adapter anzeigt. Um das Signal der Kontrollleuchte für eine Person im montierten Zustand der Komponente sichtbar zu machen, kann die Komponente einen Lichtleiter zum Weiterleiten des Lichts der Kontrollleuchte aufweisen, wobei der Lichtleiter von der Kontrollleuchte zu einer Außenseite des Balkenelements führt.

Der zweite Adapter kann als eine Platine, insbesondere eine Powerline-Platine ausgebildet sein.

Alternativ oder zusätzlich kann der zweite Adapter dazu ausgebildet sein, die Daten verschlüsselt zu übertragen bzw. verschlüsselte Daten zu empfangen und zu entschlüsseln. Für die Aktivierung der verschlüsselten Datenübertragung bzw. die Kopplung der Adapter kann an dem Balkenelement ein mit dem zweiten Adapter verbundener Taster angeordnet sein, mittels dem ein Nutzer eine Anfrage für eine verschlüsselte Datenübertragung zwischen dem ersten Adapter und dem zweiten Adapter auslösen oder bestätigen kann und/oder kann an dem Balkenelement ein maschinell und/oder von dem Nutzer lesbarer Code angebracht sein, mittels dem die Anfrage auslösbar oder bestätigbar ist. Der Code kann ein mittels einer Kamera lesbarer Barcode oder 2D-Code oder ein in einem an dem Balkenelement angebrachten passiven RFID-Tag gespeichert sein.

Alternativ oder zusätzlich kann die Komponente eine Steuereinrichtung aufweisen, die dazu ausgebildet ist, die Komponente auf der Grundlage der empfangenen Daten zu steuern und/oder ein Steuersignal für eine andere Komponente des Lichtbandsystems auf der Grundlage der empfangenen Daten zu erzeugen.

Gemäß der vorliegenden Erfindung weist ein Lichtbandsystem die Tragschiene, die elektrischen Leitungen und zumindest eine der oben beschriebenen Komponenten auf.

Zusätzlich kann das Lichtbandsystem den ersten Adapter und einen Datenanschluss aufweisen, wobei der erste Adapter mit den elektrischen Leitungen und dem Datenanschluss verbunden und dazu ausgebildet ist, von dem Datenanschluss empfangene Daten mittels des Modulationsverfahrens über die elektrischen Leitungen an den zweiten Adapter zu senden.

Nachfolgend wird die Erfindung anhand der beiliegenden Zeichnungen näher erläutert. Es zeigen:
- Fig. 1: eine Seitenansicht eines Lichtbandsystems gemäß der vorliegenden Erfindung,
- Fig. 2: eine vereinfachte Schaltung des in Fig. 1 gezeigten Lichtbandsystems,
- Fig. 3: einen Ausschnitt der Tragschiene des in Fig. 1 gezeigten Lichtbandsystems,
- Fig. 4: den Stromschienen-Einspeiser, der in der in Fig. 3 gezeigten Tragschiene montiert ist, und
- Fig. 5: eine Seitenansicht einer Komponente gemäß der vorliegenden Erfindung für das in der in Fig. 1 gezeigte Lichtbandsystem.

Komponenten mit gleichen Funktionen sind in den Figuren mit gleichen Bezugszeichen gekennzeichnet.

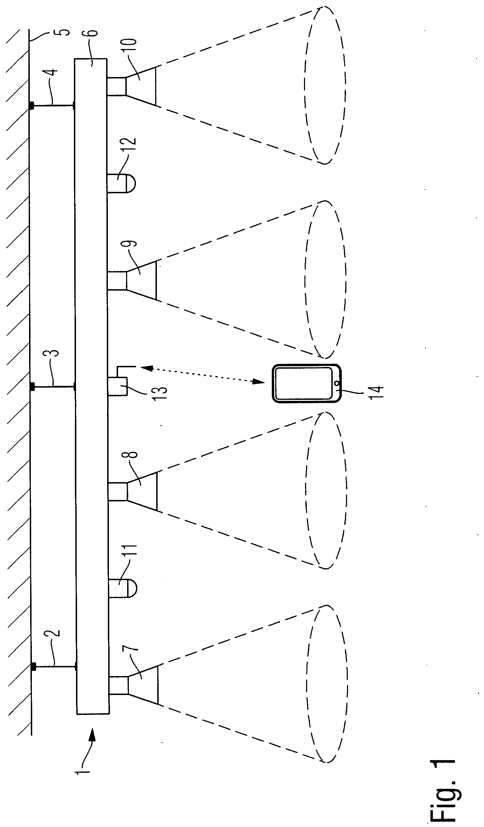

Fig. 1 zeigt eine Seitenansicht eines Lichtbandsystems 1 gemäß der vorliegenden Erfindung. Das Lichtbandsystem 1 ist mit drei Stahlseilen 2..4 an einer Decke 5 montiert und weist eine mit den Stahlseilen 2..4 verbundene Tragschiene 6, vier nach unten strahlende Leuchten 7..10, zwei Anwesenheitssensoren 11, 12 und ein Funknetzwerkmodul 13 auf. Die Leuchten 7..10, die Anwesenheitssensoren 11, 12 und das Funknetzwerkmodul 13 sind Komponenten des Lichtbandsystems 1 und werden von der Tragschiene 6 gehalten, in die sie von unten an einer beliebigen Position eingesteckt und fixiert werden. Die verbleibenden, offenen Stellen an der Unterseite der Tragschiene 6 sind mit Abdeckungen verschlossen (nicht gezeigt).

In der Tragschiene 6 verlaufen als Stromschienen ausgebildete elektrische Leitungen (nicht gezeigt), die die eingesteckten und fixierten Komponenten 7..13 kontaktieren und die Komponenten 7..13 mit Energie versorgen. Über die von den Komponenten 7..13 kontaktierten Stromschienen werden auch Daten- und Steuersignale übertragen. Die Einspeisung der Energie und der Daten- und Steuersignale in die Stromschienen erfolgt mittels eines Stromschienen-Einspeisers (nicht gezeigt).

Die Leuchten 7..10 werden bei einer von den Anwesenheitssensoren 11, 12 detektierten Anwesenheit einer Person eingeschaltet. Das Funknetzwerkmodul 13 dient dazu, einen Internet-Zugang für das sich unterhalb des Lichtbandsystems 1 befindliche WLAN-fähige Gerät 14 bereitzustellen und ist ein Wireless Access Point, das als Schnittstelle für kabellose Kommunikationsgeräte fungiert.

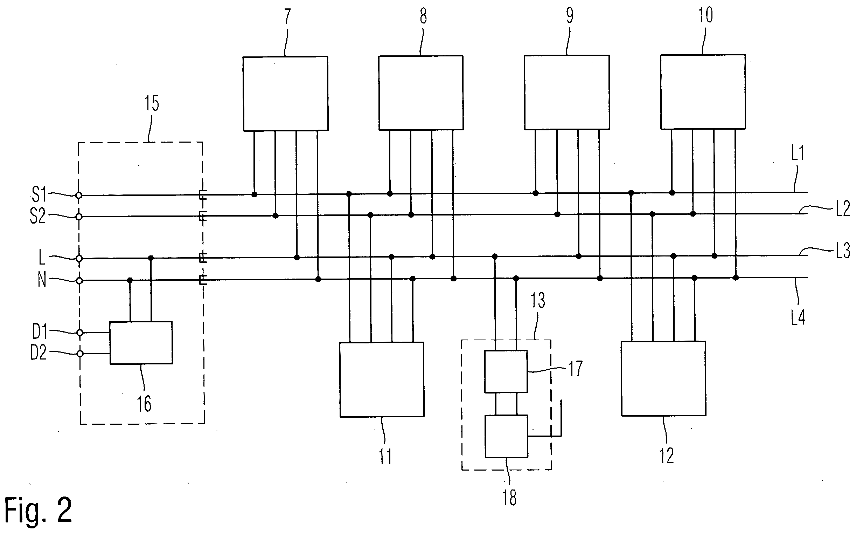

Fig. 2 zeigt eine vereinfachte Schaltung des in Fig. 1 gezeigten Lichtbandsystems 1 mit dem Stromschienen-Einspeiser 15. Der Stromschienen-Einspeiser 15 weist zwei Anschlüsse S1, S2 für den Anschluss einer zweipoligen Steuerleitung, beispielsweise einer DALI-Steuerleitung, zwei Netzanschlüsse L, N für den Anschluss an eine Netzwechselspannung, zwei Datenanschlüsse D1, D2 für den Anschluss einer Datenleitung für die Internetanbindung und einen ersten Powerline-Adapter 16 auf und stellt eine Verbindung von den Anschlüssen S1, S2, L, N, D1 und D2 zu den Stromschienen L1, L2, L3 bzw. L4, beispielsweise mittels einer Steckverbindung, her. In der in Fig. 2 gezeigten Schaltung sind nur die für die Komponenten 7..13 relevanten Stromschienen L1, L2, L3, L4 und Anschlüsse S1, S2, L, N, D1, D2 dargestellt. Da die Tragschiene 6 und der Stromschienen-Einspeiser 15 jedoch für eine Vielzahl von Anwendungen ausgelegt sind, weisen sie weitere Stromschienen und Anschlüsse, beispielsweise für einen möglichen Anschluss von Komponenten für die Not-/Sicherheitsbeleuchtung, auf.

Die Leuchten 7..10 und die Anwesenheitssensoren 11, 12 kontaktieren die Stromschienen L1, L2, L3, L4 bzw. sind mit diesen lösbar verbunden, wobei sie über die Stromschienen L3, L4 mit Energie versorgt werden und über die Stromschienen L1, L2 Steuersignale empfangen bzw. Sensorsignale senden. Das Funknetzwerkmodul 13 ist in dem gezeigten Beispiel nur mit den Stromschienen L3, L4 verbunden und weist einen zweiten Powerline-Adapter 17 sowie eine Sende- und Empfangseinheit 18 auf.

Der erste Powerline-Adapter 16 ist mit den Datenanschlüssen D1, D2 verbunden und moduliert das an diesen Anschlüssen empfangene Datensignal auf die an den Netzanschlüssen L, N anliegende und an die Stromschienen L3, L4 geleitete Netzspannung zur Datenübertragung. Das Datensignal wird dabei vom sendenden ersten Powerline-Adapter 16 im Hochfrequenzbereich, beispielsweise von 2 MHz bis 68 MHz, auf die Stromschienen L3, L4 moduliert. Der in dem Funknetzwerkmodul 13 enthaltene und mit den Stromschienen L3, L4 verbundene zweite Powerline-Adapter 17 demoduliert das auf die Netzspannung modulierte Datensignal und gibt es an die Sende- und Empfangseinheit 18 aus, welche es an das Gerät 14 über eine WLAN-Verbindung sendet. Ein von dem Gerät 14 über die WLAN-Verbindung gesendetes Datensignal wird von der Sende- und Empfangseinheit 18 empfangen und an den zweiten Powerline-Adapter 17 ausgegeben, welcher es auf die Netzspannung moduliert und an den ersten Powerline-Adapter 16 für eine Demodulation und Ausgabe an den Datenanschlüssen D1, D2 sendet. Alternativ kann das Datensignal mittels Bluetooth-Funkverfahren zu/von dem Gerät 14 übertragen werden.

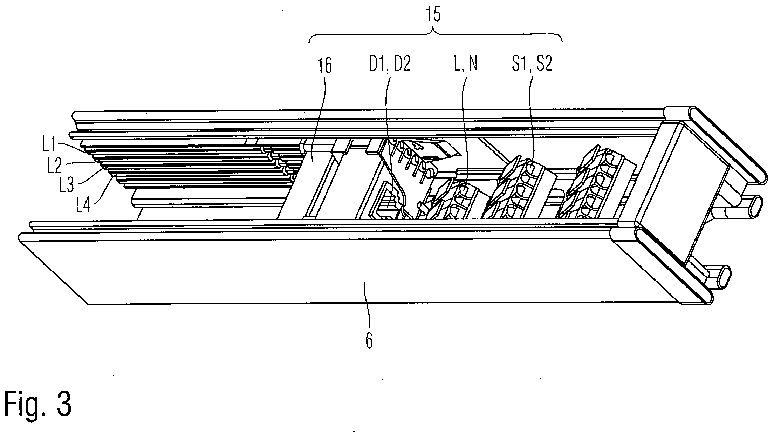

Fig. 3 zeigt einen Abschnitt der Tragschiene 6, in dem der Stromschienen-Einspeiser 15 montiert bzw. eingeschoben ist. Der Stromschienen-Einspeiser 15 kontaktiert die an zwei gegenüberliegenden Innenseiten der Tragschiene 6 verlaufenden Stromschienen L1, L2, L3, L4. Die Tragschiene 6 kann aus einem ferromagnetischen Material mit hoher Permeabilität und geringer Remanenz bestehen und dem Durchtritt von Magnetfeldern entgegen sowie elektrisch abschirmend wirken. Die Stromschienen L1, L2, L3, L4 und der Stromschienen-Einspeiser 15 mit seinen Anschlüssen S1, S2, L, N, D1, D2 sind im Inneren der Tragschiene 6 angeordnet und werden von der Tragschiene 6 abgeschirmt, um die Umgebung vor auftretenden elektrischen und/oder magnetischen Feldern zu schützen. Durch die Tragschiene 6 werden auch Störstrahlungen von außen auf die Stromschienen L1, L2, L3, L4 und den Stromschienen-Einspeiser 15 unterdrückt.

Die Komponenten 7..13 kontaktieren beim Fixieren in der Tragschiene 6 die jeweiligen Stromschienen L1, L2, L3, L4 beispielsweise mittels eines Rotationsabgriffs. Das Funknetzwerkmodul 13 kann so ausgebildet sein, dass, wenn es an der Tragschiene 6 fixiert ist, der zweite Powerline-Adapter 17 auch innerhalb der Tragschiene 6 angeordnet ist bzw. von der Tragschiene 6 abgeschirmt wird. Somit erfolgt die Powerline-Datenübertragung komplett innerhalb der schirmenden Tragschiene 6. Das Datensignal wird dann über eine Leitung an die außerhalb der Tragschiene 6 befindliche Sende- und Empfangseinheit 18 gesendet.

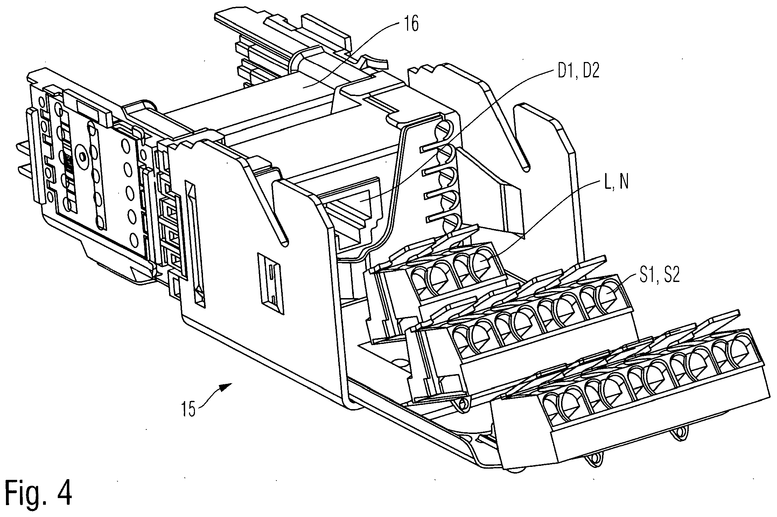

Fig. 4 zeigt den in der in Fig. 3 gezeigten Tragschiene 6 montierten Stromschienen-Einspeiser 15. Der in dem Stromschienen-Einspeiser 15 integrierte Datenanschluss D1, D2 ist ein Ethernet-Anschluss, an dem eine Cat-Leitung eingesteckt werden kann. Die anderen Anschlüsse L, N, S1, S2 sind als Federklemmen ausgeführt. Alternativ zum kabelgebundenen Ethernet-Anschluss kann der Stromschienen-Einspeiser 15 ebenfalls ein Funknetzwerkmodul 13 aufweisen, das das in die Stromschienen L3, L4 einzuspeisende Datensignal über eine Funkverbindung empfängt, wobei die Antenne und ggf. auch das Funknetzwerkmodul 13 außerhalb der schirmenden Tragschiene 6 angeordnet ist.

Mit der Tragschiene 6 können weitere einen Powerline-Adapter aufweisende Komponenten an beliebigen Stellen verbunden werden, wobei jeder Adapter gleichberechtigt mit jedem anderen kommuniziert. Alternativ kann einem bestimmten Adapter, beispielsweise dem erste Powerline-Adapter 16, die Rolle eines zentralen Koordinators zugewiesen werden, der den Datenverkehr synchronisiert und die zur Verfügung stehende Gesamtbandbreite dynamisch unter allen Teilnehmern im Netzwerk aufteilt.

Eine mit einem Powerline-Adapter versehene Komponente kann anstelle der Sende- und Empfangseinheit 18 ebenfalls einen Ethernet-Anschluss oder einen USB-Anschluss zur kabelgebundenen Ausgabe des Datensignals an ein internetfähiges Gerät aufweisen. Alternativ oder zusätzlich kann eine der Leuchten 7..10 einen Powerline-Adapter aufweisen und das empfangene Datensignal von der Leuchte 7..10 zu einem Empfangsgerät mittels Li-Fi, einem Verfahren der optischen Datenübertragung, übertragen werden. Hierzu wird in der Leuchte 7..10 von einem Modulator zumindest eine Leuchtdiode entsprechend der zu übertragenden Daten sehr schnell ein- und ausgeschaltet, so dass es das menschliche Auge nicht wahrnimmt. Eine Fotodiode am Empfangsgerät nimmt das Licht auf und wandelt es in elektrische Impulse um.

Sind die mittels Powerline über die Stromschienen L3, L4 zu übertragenden Datensignale Bild- und/oder Audiosignale, kann eine Komponente Anschlüsse, wie USB, Klinkenbuchse, VGA und/oder HDMI, zur Ausgabe bzw. Eingabe der Bild- bzw. Audiosignale aufweisen. Alternativ oder zusätzlich kann die Komponente einen Bildschirm, einen Lautsprecher, eine Kamera und/oder ein Mikrofon aufweisen, die das empfangene Bild-/Audiosignal ausgeben bzw. das zu sendende Bild-/Audiosignal erzeugen.

Alternativ kann das empfangene Datensignal zur Steuerung und/oder Überwachung der Komponente selbst genutzt werden, so dass für die Komponente keine Steuersignale über die Stromschienen L1, L2 übertragen werden müssen und die Tragschiene 6 lediglich die zwei Stromschienen L3 und L4 aufweisen muss bzw. die Stromschienen L1, L2 für andere Anwendungen, wie die Stromversorgung für Sicherheitsleuchten, genutzt werden können. Hierfür weist die Komponente einen Powerline-Adapter und einen Micro-Kontroller oder eine andere Steuereinrichtung auf, die die Komponente auf der Grundlage des von dem Powerline-Adapter empfangenen Datensignals steuert. Alternativ oder zusätzlich kann die Komponente auf der Grundlage des von dem Powerline-Adapter empfangenen Datensignals Steuersignale für eine andere Komponente erzeugen und die erzeugten Steuersignale mittels einer Funk- oder Infrarot-Signalverbindung an die andere Komponente übertragen, um diese zu steuern.

Das Lichtbandsystem 1 kann mehrere Tragschienen 6 aufweisen, die mittels Steckverbinder/Weichen miteinander mechanisch und elektrisch verbunden sind.

Das Funknetzwerkmodul 13 ist ein Beispiel einer Komponente gemäß der vorliegenden Erfindung, das mit seinem zweiten Powerline-Adapter 17 das Datensignal über die zwei Stromschienen L3 und L4 senden und/oder empfangen kann. In dem in Fig. 1 gezeigten Beispiel ist der erste Powerline-Adapter 16 und der Datenanschluss D1, D2 in das Lichtbandsystem 1 integriert. Es ist jedoch auch möglich, dass sich der erste Powerline-Adapter 16 mit dem Datenanschluss D1, D2 außerhalb des Lichtbandsystems 1 befindet und mit der Zuleitung bzw. einer Stromleitung, die zum Lichtbandsystem 1 und seinen Netzanschlüssen L, N führt, verbunden ist. Der erste Powerline-Adapter 16 kann sich in einem anderen Lichtbandsystem befinden, in einer mit der Stromleitung verbundenen Steckdose stecken oder in einem elektrischen Verteiler (Sicherungskasten), von dem die Stromleitung ausgeht, installiert sein.

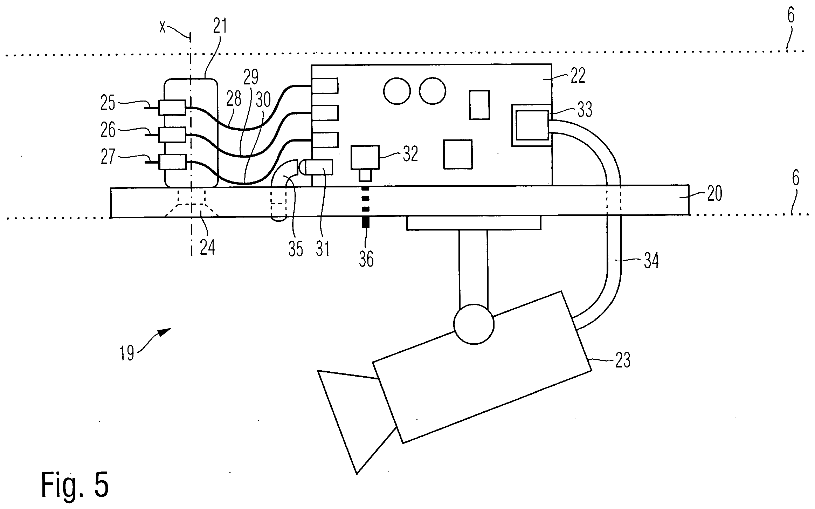

Fig. 5 zeigt ein anderes Beispiel einer Komponente 19 gemäß der vorliegenden Erfindung, die in das in Fig. 1 gezeigte Lichtbandsystem 1 oder in ein Lichtbandsystem mit dem oben beschriebenen externen ersten Powerline-Adapter 16 installiert werden kann. Die gepunktete Linie symbolisiert Tragschiene 6, in welche die Komponente 19 von unten eingesetzt ist. Die Komponente 19 dient zum Überwachen eines gewünschten Bereichs unterhalb des Lichtbandsystems 1 und weist ein Balkenelement 20, einen Rotationsabgriff 21, einen Powerline-Adapter 22 und eine Kamera 23 auf. Das Balkenelement 20 ist als Platte ausgebildet und verschließt im eingesetzten Zustand die untere Öffnung der U-förmigen Tragschiene 6 teilweise.

Der auf dem Balkenelement 20 befestigte Rotationsabgriff 21 ist mittels einer von außen zugänglichen Schraube 24 um die in Fig. 5 gezeigte Achse x drehbar, wobei die an dem Rotationsabgriff 21 angebrachten Kontaktelemente 25..27 bei einer Drehung um 90 Grad um die Achse x jeweils eine in der Tragschiene 6 verlaufende Stromschiene (nicht gezeigt) kontaktieren. Die kontaktierten Stromschienen sind mit den Netzanschlüssen L (Phase bzw. Außenleiter), N (Nullleiter) und PE (Schutzleiter bzw. Erde) elektrisch verbunden. Im kontaktierten Zustand kann der Rotationsabgriff 21 die Komponente 19 in der Tragschiene 6 fixieren. Zusätzlich oder alternativ kann die Komponente 19 an der Tragschiene 6 mittels einer Schapp- und/oder Schraubverbindung befestigt werden.

Ein über die Stromschienen bzw. die Netzanschlüsse gesendetes Datensignal wird von dem Powerline-Adapter 22, welcher mittels drei Leitungen 28..30 mit den Kontaktelementen 25..27 verbunden und auf dem Balkenelement 20 befestigt ist, empfangen. Der Powerline-Adapter 22 ist als Platine ausgebildet und weist neben den bekannten Elementen für die Modulation und Demodulation des Datensignals auf die Netzspannung eine Kontrollleuchte (LED) 31, einen Taster 32 und einen Datenanschluss (Ethernet-Anschluss) 33, an dem eine zur Kamera 23 durch das Balkenelement 20 verlaufende Cat-Leitung 34 eingesteckt ist, auf.

Die Kontrollleuchte 31 zeigt den Status der Verbindung "Verbunden" oder "Verbindungsanfrage" zwischen dem ersten Powerline-Adapter 16 und dem Powerline-Adapter 22 mittels unterschiedlicher Blinkfrequenzen oder einem Dauerlicht an. Damit das Licht der auf der Platine befindlichen Kontrollleuchte 31 von einer Person gesehen werden kann, weist die Komponente 19 einen Lichtleiter 35 auf, der das Licht von der Kontrollleuchte 31 durch das Balkenelement 20 nach Außen führt. Es können sich noch weitere Kontrollleuchten auf der Platine befinden, die einen Zustand des Powerline-Adapters 22, wie "mit Netzspannung versorgt", "Überhitzung" oder einen anderen Status anzeigen und dessen Licht mittels Lichtleiter nach Außen geführt wird.

Die Daten werden zwischen dem ersten Powerline-Adapter 16 und dem Powerline-Adapter 22 verschlüsselt übertragen, wobei mittels dem Taster 32 eine Anfrage für den Aufbau einer verschlüsselten Datenübertragung zwischen dem ersten Powerline-Adapter 16 und dem Powerline-Adapter 22 ausgelöst oder bestätigt werden kann. Der auf der Platine befindliche Taster 32 ist hierzu über einen durch das Balkenelement 20 führenden Betätigungsstift 36 von einer Person von außen betätigbar.

Nach einem erfolgreichen Verbindungsaufbau überträgt der Powerline-Adapter 22 das von der Kamera 23 über die Cat-Leitung 34 empfangene Bildsignal verschlüsselt an den ersten Powerline-Adapter 16, wobei die Stromversorgung der Kamera 23 über die Cat-Leitung 34 bzw. den Datenanschluss (PoE) erfolgt.

## Patentansprüche

1. Lichtbandsystem (1), aufweisend
zumindest eine Tragschiene (6) zum Befestigen von Komponenten (7..13) eines dem Lichtbandsystem (1) zugehörigen Beleuchtungssystems an der Tragschiene (6),
in der Tragschiene (6) verlaufende und von den Komponenten (7..13) zur Stromversorgung der Komponenten (7..13) kontaktierbare elektrische Leitungen (L3, L4),
einen Datenanschluss (D1, D2) zum Empfangen von Daten, und
einen mit den elektrischen Leitungen (L3, L4) und dem Datenanschluss verbundenen ersten Adapter (16), der dazu ausgebildet ist, von dem Datenanschluss (D1, D2) empfangene Daten mittels eines Modulationsverfahrens über die elektrischen Leitungen (L3, L4) an einen zweiten Adapter (17), der an die elektrischen Leitungen (L3, L4) anschließbar ist, zu senden,
**dadurch gekennzeichnet, dass**
die elektrischen Leitungen (L3, L4) als Stromschienen ausgebildet sind,
das Lichtbandsystem (1) einen sich innerhalb der Tragschiene (6) befindlichen Stromschienen-Einspeiser (15) zur Einspeisung von Strom für die Komponenten (7..13) in die Stromschienen aufweist,
der erste Adapter (16) in dem Stromschienen-Einspeiser (15) integriert ist,
das Lichtbandsystem zumindest eine der Komponenten (13, 19) aufweist;
die zumindest eine Komponente (13, 19) Mittel zum Befestigen der Komponente (13, 19) an der Tragschiene (6), Mittel (21) zum Kontaktieren der elektrischen Leitungen (L3, L4) und den zweiten Adapter (17, 22) aufweist, wobei der zweite Adapter (17, 22) mit den elektrischen Leitungen (L3, L4) verbunden ist; und
der mit den elektrischen Leitungen (L3, L4) verbundene zweite Adapter (17, 22) dazu ausgebildet ist, Daten mittels eines Modulationsverfahrens über die elektrischen Leitungen (L3, L4) an den ersten Adapter (16) zu senden und/oder über die elektrischen Leitungen (L3, L4) übertragene Daten mittels eines Demodulationsverfahrens zu empfangen.

2. Lichtbandsystem nach Anspruch 1, wobei
der Datenanschluss (D1, D2) in dem Stromschienen-Einspeiser (15) integriert ist.

3. Lichtbandsystem nach einem der vorangegangenen Ansprüche, wobei
der erste Adapter (16) ein Powerline-Adapter ist.

4. Lichtbandsystem nach einem der vorrangegangenen Ansprüche, wobei
der Datenanschluss (D1, D2) ein Ethernet-Anschluss oder ein WLAN-Anschluss ist.

5. Lichtbandsystem nach einem der vorrangegangenen Ansprüche, wobei
die elektrischen Leitungen (L3, L4) in der Tragschiene (6) so angeordnet sind, dass sie von den Komponenten (7..13) an einer beliebigen Stelle entlang der Tragschiene (6) kontaktierbar sind.

6. Lichtbandsystem nach einem der vorrangegangenen Ansprüche, wobei
die zumindest eine Komponente (13, 19) eine Schnittstelle (18, 33) zur kabelgebundenen oder kabellosen Eingabe der von dem zweiten Adapter zu sendenden Daten bzw. Ausgabe der von dem zweiten Adapter empfangenen Daten aufweist.

7. Lichtbandsystem nach Anspruch 6, wobei
die Schnittstelle (18, 33) dazu ausgebildet ist, ein an ihr angeschlossenes Gerät mit Energie zu versorgen.

8. Lichtbandsystem nach einem der Ansprüche 1 bis 7, wobei
die zumindest eine Komponente (13, 19) ein Balkenelement (20) aufweist, an dem zumindest das Mittel zum Befestigen der Komponente an der Tragschiene (6) und der zweiten Adapter (17, 22) befestigt sind und das eine Öffnung in der Tragschiene (6) zumindest teilweise verschließt, wenn die Komponente (13, 19) an der Tragschiene (6) befestigt ist.

9. Lichtbandsystem nach Anspruch 8, wobei
der zweite Adapter (17, 22) an dem Balkenelement (20) so angeordnet ist, dass er sich innerhalb der Tragschiene (6) befindet, wenn die Komponente (13, 19) an der Tragschiene (6) befestigt ist,
der zweite Adapter (17, 22) zumindest eine Kontrollleuchte (31) aufweist, die einen bestimmten Zustand des zweiten Adapters (17, 22) oder einen bestimmten Status der Verbindung zwischen dem ersten Adapter (16) und dem zweiten Adapter (17, 22) anzeigt, und
die zumindest eine Komponente (13, 19) einen Lichtleiter (35) zum Weiterleiten des Lichts der Kontrollleuchte (31) aufweist, wobei der Lichtleiter (35) von der Kontrollleuchte (31) zu einer Außenseite des Balkenelements (20) führt.

10. Lichtbandsystem nach Anspruch 8 oder 9, wobei
der zweite Adapter (17, 22) dazu ausgebildet ist, die Daten verschlüsselt zu übertragen bzw. verschlüsselte Daten zu empfangen und zu entschlüsseln,
an dem Balkenelement (20) ein mit dem zweiten Adapter (17, 22) verbundener Taster (32, 36) angeordnet ist, mittels dem eine Person eine Anfrage für eine verschlüsselte Datenübertragung zwischen dem ersten Adapter (16) und dem zweiten Adapter (17, 22) auslösen oder bestätigen kann und/oder
an dem Balkenelement (20) ein maschinell und/oder von der Person lesbarer Code angebracht ist, mittels dem die Anfrage auslösbar oder bestätigbar ist.

11. Lichtbandsystem nach einem der Ansprüche 7 bis 10, wobei
die zumindest eine Komponente (13, 19) eine Steuereinrichtung aufweist, die dazu ausgebildet ist, die zumindest eine Komponente (13, 19) auf der Grundlage der empfangenen Daten zu steuern und/oder ein Steuersignal für eine andere Komponente (13, 19) des Lichtbandsystems auf der Grundlage der empfangenen Daten zu erzeugen.

## Claims

1. Light trunking system (1), comprising:
at least one trunking rail (6) for mounting components (7 .. 13) of a lighting system associated with the light trunking system (1) on the trunking rail (6);
electrical conductors (L3, L4) running within the trunking rail (6) and contactable by the components (7 .. 13) for supplying power to the components (7 .. 13);
a data interface (D1, D2) for receiving data; and
a first adapter (16) connected to the electrical conductors (L3, L4) and to the data interface, the first adapter (16) being configured to transmit data received via the data interface (D1, D2) by means of a modulation method via the electrical conductors (L3, L4) to a second adapter (17) connectable to the electrical conductors (L3, L4);
**characterized in that**:
- the electrical conductors (L3, L4) are designed as busbars,
- the light trunking system (1) comprises a busbar feed unit (15) located within the trunking rail (6) for supplying power to the components (7 .. 13) via the busbars,
- the first adapter (16) is integrated into the busbar feed unit (15),
- the light trunking system (1) comprises at least one of the components (13, 19);
- the at least one component (13, 19) comprises means for mounting the component (13, 19) to the trunking rail (6), means (21) for contacting the electrical conductors (L3, L4), and the second adapter (17, 22), wherein the second adapter (17, 22) is connected to the electrical conductors (L3, L4); and
- the second adapter (17, 22) connected to the electrical conductors (L3, L4) is configured to transmit data via a modulation method to the first adapter (16) and/or to receive data transmitted via the electrical conductors (L3, L4) via a demodulation method.

2. Light trunking system according to claim 1, wherein the data interface (D1, D2) is integrated into the busbar feed unit (15).

3. Light trunking system according to any of the preceding claims, wherein the first adapter (16) is a powerline adapter.

4. Light trunking system according to any of the preceding claims, wherein the data interface (D1, D2) is an Ethernet interface or a WLAN interface.

5. Light trunking system according to any of the preceding claims, wherein the electrical conductors (L3, L4) in the trunking rail (6) are arranged such that they can be contacted by the components (7 .. 13) at any point along the trunking rail (6).

6. Light trunking system according to any of the preceding claims, wherein the at least one component (13, 19) comprises an interface (18, 33) for wired or wireless input of data to be transmitted by the second adapter and/or output of data received by the second adapter.

7. Light trunking system according to claim 6, wherein the interface (18, 33) is configured to supply power to a device connected to it.

8. Light trunking system according to any of claims 1 to 7, wherein the at least one component (13, 19) comprises a bar element (20) on which at least the means for mounting the component to the trunking rail (6) and the second adapter (17, 22) are mounted, and which at least partially closes an opening in the trunking rail (6) when the component (13, 19) is mounted to the trunking rail (6).

9. Light trunking system according to claim 8, wherein:
- the second adapter (17, 22) is arranged on the bar element (20) such that it is located within the trunking rail (6) when the component (13, 19) is mounted to the trunking rail (6),
- the second adapter (17, 22) comprises at least one indicator light (31) indicating a specific state of the second adapter (17, 22) or a specific status of the connection between the first adapter (16) and the second adapter (17, 22), and
- the at least one component (13, 19) comprises a light guide (35) for transmitting the light of the indicator light (31), wherein the light guide (35) leads from the indicator light (31) to an outer side of the bar element (20).

10. Light trunking system according to claim 8 or 9, wherein:
- the second adapter (17, 22) is configured to transmit encrypted data and/or to receive and decrypt encrypted data,
- a button (32, 36) connected to the second adapter (17, 22) is arranged on the bar element (20), by means of which a person can initiate or confirm a request for encrypted data transmission between the first adapter (16) and the second adapter (17, 22), and/or
- a machine-readable and/or human-readable code is arranged on the bar element (20), by means of which the request can be initiated or confirmed.

11. Light trunking system according to any of claims 7 to 10, wherein the at least one component (13, 19) comprises a control unit configured to control the at least one component (13, 19) based on the received data and/or to generate a control signal for another component (13, 19) of the light trunking system based on the received data.

## Revendications

1. Système d'éclairage à goulotte (1), comprenant :
au moins un rail de goulotte (6) destiné à fixer des composants (7 .. 13) d'un système d'éclairage associé au système d'éclairage à goulotte (1) sur le rail de goulotte (6) ;
des conducteurs électriques (L3, L4) s'étendant dans le rail de goulotte (6) et pouvant être mis en contact par les composants (7 .. 13) pour alimenter ces composants (7 .. 13) ;
une interface de données (D1, D2) destinée à recevoir des données ; et
un premier adaptateur (16) connecté aux conducteurs électriques (L3, L4) et à l'interface de données, ledit premier adaptateur étant conçu pour transmettre, au moyen d'un procédé de modulation, les données reçues via l'interface de données (D1, D2) sur les conducteurs électriques (L3, L4) à un second adaptateur (17) pouvant être connecté aux conducteurs électriques (L3, L4) ;
**caractérisé en ce que** :
- les conducteurs électriques (L3, L4) sont conçus comme des barres conductrices ;
- le système d'éclairage à goulotte (1) comprend une unité d'alimentation (15) située à l'intérieur du rail de goulotte (6) pour alimenter les composants (7 .. 13) via les barres conductrices ;
- le premier adaptateur (16) est intégré dans l'unité d'alimentation (15) ;
- le système d'éclairage à goulotte comprend au moins l'un des composants (13, 19) ;
- ledit composant (13, 19) comprend des moyens de fixation sur le rail de goulotte (6), des moyens (21) de contact avec les conducteurs électriques (L3, L4), et le second adaptateur (17, 22), ce dernier étant connecté aux conducteurs électriques (L3, L4) ;
- le second adaptateur (17, 22) connecté aux conducteurs électriques (L3, L4) est conçu pour transmettre des données au moyen d'un procédé de modulation vers le premier adaptateur (16) et/ou pour recevoir des données transmises via les conducteurs électriques (L3, L4) au moyen d'un procédé de démodulation.

2. Système d'éclairage à goulotte selon la revendication 1, dans lequel l'interface de données (D1, D2) est intégrée dans l'unité d'alimentation (15).

3. Système d'éclairage à goulotte selon l'une quelconque des revendications précédentes, dans lequel le premier adaptateur (16) est un adaptateur CPL (courant porteur en ligne).

4. Système d'éclairage à goulotte selon l'une quelconque des revendications précédentes, dans lequel l'interface de données (D1, D2) est une interface Ethernet ou une interface WLAN.

5. Système d'éclairage à goulotte selon l'une quelconque des revendications précédentes, dans lequel les conducteurs électriques (L3, L4) dans le rail de goulotte (6) sont disposés de manière à pouvoir être mis en contact par les composants (7 .. 13) à n'importe quel endroit le long du rail de goulotte (6).

6. Système d'éclairage à goulotte selon l'une quelconque des revendications précédentes, dans lequel ledit composant (13, 19) comprend une interface (18, 33) pour l'entrée filaire ou sans fil de données à transmettre par le second adaptateur et/ou pour la sortie de données reçues par le second adaptateur.

7. Système d'éclairage à goulotte selon la revendication 6, dans lequel l'interface (18, 33) est conçue pour alimenter un appareil connecté à ladite interface.

8. Système d'éclairage à goulotte selon l'une quelconque des revendications 1 à 7, dans lequel ledit composant (13, 19) comprend un élément en forme de barre (20) sur lequel sont montés au moins les moyens de fixation du composant sur le rail de goulotte (6) et le second adaptateur (17, 22), et qui ferme au moins partiellement une ouverture dans le rail de goulotte (6) lorsque le composant (13, 19) est fixé sur le rail de goulotte (6).

9. Système d'éclairage à goulotte selon la revendication 8, dans lequel :
- le second adaptateur (17, 22) est disposé sur l'élément en forme de barre (20) de sorte qu'il se trouve à l'intérieur du rail de goulotte (6) lorsque le composant (13, 19) est fixé sur le rail de goulotte (6),
- le second adaptateur (17, 22) comprend au moins un voyant (31) indiquant un état spécifique du second adaptateur (17, 22) ou un statut spécifique de la connexion entre le premier adaptateur (16) et le second adaptateur (17, 22),
- ledit composant (13, 19) comprend un guide de lumière (35) pour transmettre la lumière du voyant (31), le guide de lumière (35) s'étendant du voyant (31) jusqu'à un côté extérieur de l'élément en forme de barre (20).

10. Système d'éclairage à goulotte selon la revendication 8 ou 9, dans lequel :
- le second adaptateur (17, 22) est conçu pour transmettre des données de manière cryptée et/ou pour recevoir et déchiffrer des données cryptées,
- un bouton (32, 36) relié au second adaptateur (17, 22) est disposé sur l'élément en forme de barre (20), au moyen duquel une personne peut initier ou confirmer une demande de transmission de données cryptées entre le premier adaptateur (16) et le second adaptateur (17, 22),
- un code lisible par une machine et/ou par une personne est apposé sur l'élément en forme de barre (20), au moyen duquel ladite demande peut être initiée ou confirmée.

11. Système d'éclairage à goulotte selon l'une quelconque des revendications 7 à 10, dans lequel ledit composant (13, 19) comprend une unité de commande conçue pour commander ledit composant (13, 19) sur la base des données reçues et/ou pour générer, sur la base des données reçues, un signal de commande destiné à un autre composant (13, 19) du système d'éclairage à goulotte.
